# EUROPÄISCHE PATENTSCHRIFT

(11) **EP 0 456 164 B1**
(45) Veröffentlichungstag und Bekanntmachung des Hinweises auf die Patenterteilung: **03.02.1993**
(21) Anmeldenummer: 91107328.6
(22) Anmeldetag: 06.05.1991
(51) Int. Cl.: B62D 25/20

(54) **Kraftfahrzeug mit einem Steinschlag ausgesetzten Karosserieteil**
Motor vehicle with a body part exposed to losse chippings
Véhicule à moteur avec partie de carrosserie exposée aux projections de gravillons

(30) Priorität: 09.05.1990 DE 4014793
(43) Veröffentlichungstag der Anmeldung: 13.11.1991
(73) Patentinhaber: Adam Opel Aktiengesellschaft, 65428 Rüsselsheim (DE)
(72) Erfinder: Häner, Bernhard, Dipl.-Ing., W-6085 Nauheim (DE)
(74) Vertreter: Bergerin, Ralf, Dipl.-Ing.

(56) Entgegenhaltungen:
- US-A- 4 402 545
- PATENT ABSTRACTS OF JAPAN vol. 10, no. 291 (M-522)(2347) 03 Oktober 1986, & JP-A-61 105275 (NISSAN MOTOR) 23 Mai 1986,

## Beschreibung

Die Erfindung betrifft ein Kraftfahrzeug mit einem Steinschlag ausgesetzten Karosserieteil, welches zumindest eine in ihm hinein oder aus ihm heraus gerichtete Sicke aufweist.

In Karosserieteilen werden aus unterschiedlichen Gründen Sicken vorgesehen. Diese können in das Karosserieteil hinein oder aus ihm heraus gerichtet sein und quer zur Fahrtrichtung, längst dazu oder auch diagonal verlaufen. Meist dienen solche Sicken dazu, die Steifigkeit eines Blechteiles zu erhöhen, beispielsweise bei den Bodenblechen. Oftmals sind Sicken auch aus Gründen der Ziehtechnik oder formbedingt notwendig. Im Schwellerbereich kann man durch Sicken Platz für die Unterbringung des Blechendbereiches einer Seitenwand schaffen.

Nachteilig bei solchen Sicken ist es, daß sie stets einen Bereich aufweisen, gegen den insbesondere von den Antriebsräder hochgeschleuderte Steine mit einem oftmals rechtwinkligen Einfallswinkel prallen. Dadurch kommt es zu Steinschlagschäden, insbesondere zu einer Beschädigung des Oberflächenschutzes und dadurch zu Rostschäden.

Der Erfindung liegt das Problem zugrunde, ein Kraftfahrzeug der eingangs genannten Art so auszubilden, daß es im Bereich der Sicken seiner Karosserieteile nicht zu Steinschlagschäden kommen kann.

Dieses Problem wird erfindungsgemäß dadurch gelöst, daß die Sicke asymmetrisch ausgebildet ist und ihre dem Steinschlag ausgesetzten Bereiche einen möglichst spitzen Winkel mit der Flugrichtung der hochgeschleuderten Steine bilden.

Durch diese Gestaltung der Sicken prallen die Steine auch im Bereich der Sicken in einem spitzen Winkel gegen das Karosserieteil. Sie werden deshalb von dem Karosserieteil derart zurück zur Fahrbahn abgelenkt, daß der Energieverlust an der Aufprallstelle relativ gering ist und es deshalb nicht zu einer Beschädigung des Oberflächenschutzes des Karosserieteiles kommt. Durch die Erfindung wird somit auf sehr einfache Weise Steinschlagschaden vermieden.

Nach innen in das Karosserieteil hinein gerichtete Sicken können die für die Festigkeit des Karosserieteiles erforderliche Höhe aufweisen, ohne daß dadurch für den Steinschlag ungünstig steile Flanken erforderlich werden, wenn sie eine steil in das Karosserieteil hineinführende Einlaufflanke und eine mit der Flugrichtung einen spitzen Winkel bildende, zurück zur Außenkontur des Karosserieteils verlaufende Auslaufflanke aufweisen.

Eine andere, vorteilhafte Ausgestaltung der Erfindung für nach innen gerichtete Sicken besteht darin, daß die Auslaufflanke einen oberhalb der Einlaufflanke liegenden, steil zur Flugrichtung der Steine verlaufenden Flankenbereich und daran anschließend einen langgestreckten, geradlinigen Auslaufbereich aufweist, der mit der Flugrichtung der Steine einen spitzen Winkel bildet.

Falls die Sicke aus dem Karosserieteil heraus gerichtet ist, wird das der Erfindung zugrundeliegende Problem dadurch gelöst, daß die Einlaufflanke der Sicke einen möglichst spitzen Winkel mit der Flugrichtung der hochgeschleuderten Steine bildet.

Auch solche nach außen gerichtete Sicken können eine für die Festigkeit des Karosserieteiles erforderliche Höhe aufweisen, ohne daß dadurch für den Steinschlag ungünstig steile Flanken erforderlich werden, wenn die Sicken jeweils im Anschluß an ihre im spitzen Winkel zur Flugrichtung der hochgeschleuderten Steine verlaufenden Einlaufflanke einen in die Außenkontur des Karosserieteiles hinein gerichteten Sickenbereich und daran anschließend eine zurück zur Außenkontur des Karosserieteiles führende Auslaufflanke aufweist.

Die Erfindung läßt verschiedene Ausführungsformen zu. Zur weiteren Verdeutlichung ihres Grundprinzips sind mehrere davon in der Zeichnung dargestellt und werden nachfolgend beschrieben. Diese zeigt in
Fig.1 ein Karosserieteil mit Sicken nach dem Stand der Technik,
Fig.2 eine Seitenansicht eines Kraftfahrzeugs mit im Maßstab übertrieben dargestellten Sicken gemäß der Erfindung im Seitenschweller,
Fig.3 eine Seitenansicht eines Blechbereiches mit einer anderen Ausführungsform einer Sicke,
Fig.4 eine Seitenansicht eines Blechbereiches mit einer weiteren Ausführungsform einer Sicke.

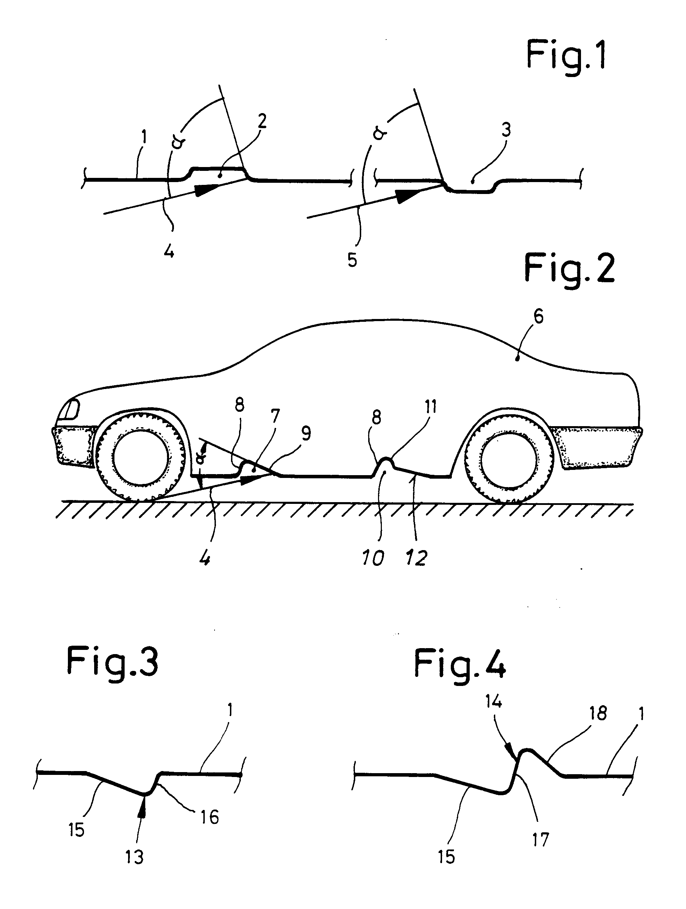

Die Figur 1 zeigt ein Karosserieteil 1, welches eine in das Karosserieteil 1 hineingedrückte Sicke 2 und eine aus ihm herausgedrückte Sicke 3 aufweist. Zwei Pfeile 4, 5 zeigen die Richtung an, in welche vom Fahrzeug hochgeschleuderte Steine sich zum Karosserieteil 1 hin bewegen.

Man erkennt, daß solche Steine in etwa rechtwinklig mit einem Winkel alpha gegen einen rückwärtigen Bereich der Sicke 2 und einen vorderen Bereich der Sicke 3 treffen. Dadurch kommt es leicht zu Steinschlagschäden.

Bei dem in Figur 2 als Ganzes dargestellten Kraftfahrzeug 6 ist eine quer verlaufende Sicke 7 dargestellt, die gemäß der Erfindung gestaltet ist. Sie hat eine steil in das Karosserieteil hineinführende Einlaufflanke 8 und eine flach nach hinten hin abfallende Auslaufflanke 9. Der Pfeil 4 zeigt wiederum die Flugrichtung von hochgeschleuderten Steinen. Zu erkennen ist, daß diese statt im rechten Winkel in einem spitzen Winkel alpha gegen die Auslaufflanke 9 gelangen, so daß die Gefahr eines Steinschlagschadens entsprechend geringer ist.

Weiter hinten als die Sicke 7 ist in Figur 2 eine weitere Sicke 10 dargestellt, welche genau wie die Sicke 7 eine steil in das Karosserieteil hineinführende Einlaufflanke 8 hat. Dieser schließt sich ein relativ steil nach unten gerichteter, jedoch im Vergleich zur Einlaufflanke 8 kürzerer, rückwärtiger Flankenbereich 11 an, der von einem geradlinigen, flach abfallenden Auslaufbereich 12 fortgesetzt wird. Der rückwärtige, steile Flankenbereich 11 liegt bei dieser Ausführungsform so hoch hinter der Einlaufflanke 8, daß gegen ihn keine Steine gelangen können. Die gegen den Auslaufbereich 12 gelangenden Steine werden relativ geringfügig umgelenkt, so daß sie beim Auftreffen keine Schäden verursachen.

Die Figuren 3 und 4 zeigen, daß das der Erfindung zugrunde liegende Prinzip auch bei einer aus einem Karosserieteil 1 nach außen gerichteten Sicke 13, 14 Anwendung finden kann. Die in Figur 3 gezeigte Sicke 13 beginnt mit einer flach nach unten abfallenden Einlaufflanke 15 und läuft mit einer kurzen, steilen Auslaufflanke 16 zurück in die Kontur des Karosserieteiles 1.

Auch die Sicke 14 nach Figur 4 beginnt mit einer flach nach unten abfallenden Einlaufflanke 15. Ihr schließt sich ein Sickenbereich 17 an, die jedoch nicht nur bis in die Kontur des Karosserieteiles 1 zurückführt, sondern in es hinein. Zurück zur Kontur des Karosserieteiles führt gemäß Figur 4 eine Auslaufflanke 18. Man könnte bei Figur 4 auch von zwei unmittelbar aufeinanderfolgenden Sicken sprechen, nämlich einer Sicke 13 gemäß Figur 3 und einer Sicke 7 gemäß Figur 2. Die Auslaufflanke 18 gemäß Figur 4 kann allerdings steil verlaufen, weil sie durch die Einlaufflanke 15 vor Steinschlag geschützt ist.

## Patentansprüche

1. Kraftfahrzeug mit einem Steinschlag ausgesetzten Karosserieteil, welches zumindest eine in ihm hinein oder aus ihm heraus gerichtete Sicke aufweist, dadurch gekennzeichnet, daß die Sicke (7, 10, 13, 14) asymmetrisch ausgebildet ist und ihre dem Steinschlag ausgesetzten Bereiche (9, 12, 15) einen möglichst spitzen Winkel mit der Flugrichtung der hochgeschleuderten Steine bilden.

2. Kraftfahrzeug nach Anspruch 1, bei dem die Sicke in das Karosserieteil hinein gerichtet ist, dadurch gekennzeichnet, daß die Sicke (7) eine steil in das Karosserieteil (1) hineinführende Einlaufflanke (8) und eine mit der Flugrichtung einen spitzen Winkel bildende, zurück zur Außenkontur des Karosserieteils verlaufende Auslaufflanke (9) aufweisen.

3. Kraftfahrzeug nach Anspruch 2, dadurch gekennzeichnet, daß die Auslaufflanke einen oberhalb der Einlaufflanke (8) liegenden, steil zur Flugrichtung der Steine verlaufenden Flankenbereich (11) und daran anschließend einen langgestreckten, geradlinigen Auslaufbereich (12) aufweist, der mit der Flugrichtung der Steine einen spitzen Winkel bildet.

4. Kraftfahrzeug nach Anspruch 1, bei dem die Sicke aus dem Karosserieteil heraus gerichtet ist, dadurch gekennzeichnet, daß die Einlaufflanke (15) der Sicke (13) einen möglichst spitzen Winkel mit der Flugrichtung der hochgeschleuderten Steine bildet.

5. Kraftfahrzeug nach Anspruch 4, dadurch gekennzeichnet, daß die Sicke (14) im Anschluß an ihre im spitzen Winkel zur Flugrichtung der hochgeschleuderten Steine verlaufenden Einlaufflanke (15) einen in die Außenkontur des Karosserieteiles (1) hinein gerichteten Sickenbereich (17) und daran anschließend eine zurück zur Außenkontur des Karosserieteiles (1) führende Auslaufflanke (18) aufweist.

## Claims

1. Motor vehicle with a body part, which is exposed to stones being thrown up, which has a crease directed into or from the body part, **characterised** in that the crease (7, 10, 13, 14) is constructed asymmetrically and its areas (9, 12, 15) exposed to the stones being thrown up form a vertical angle as possible with respect to the path of the stones being flung up.

2. Motor vehicle according to claim 1, in which the crease is directed into the body part, **characterised** in that the crease (7) has an inlet side (8) leading into the body part at a vertical angle and an outlet side (9) forming a vertical angle with respect to the direction of the flying stones and leading back to the external contour of the body part.

3. Motor vehicle according to claim 2, **characterised** in that the outlet side has a side region (11) situated above the inlet side (8) and running at a steep angle to the direction of the stones being thrown up and connected to this an elongated, linear outlet region (12) which forms a vertical angle to the direction of the stones being thrown up.

4. Motor vehicle according to claim 1, in which the crease projects from the body part, **characterised** in that the inlet side (15) of the crease forms a vertical angle as possible with respect to the direction of the stones being thrown up.

5. Motor vehicle according to claim 4, **characterised** in that connected to the inlet side (15) of the flight path of the stones being thrown up at a vertical angle, the crease (14) has a crease area (17) directed into the outer contour of the body part (1) and connected thereto an outlet side (18) leading back to the outer contour of the body part (1).

## Revendications

1. Véhicule automobile comportant une partie de carrosserie exposée aux projection de pierres qui comporte au moins une moulure rentrante ou sortante, caractérisé par le fait que la moulure (7, 10, 13, 14) est asymétrique et que ses parties (9, 12, 15) exposées aux projections de pierres forment un angle aussi aigu que possible avec la trajectoire des pierres projetées.

2. Véhicule automobile selon la revendication 1, dans lequel la moulure est rentrante dans la partie de carrosserie, caractérisé par le fait que la moulure (7) comporte un flanc d'entrée (8) à forte pente rentrant à l'intérieur de la partie de carrosserie (1) et un flanc de sortie (9) qui forme un angle aigu avec la trajectoire et se raccorde au profil extérieur de la partie de carrosserie.

3. Véhicule automobile selon la revendication 2, caractérisé par le fait que le flanc de sortie comporte une partie de flanc (11) qui est située au-dessus du flanc d'entrée (8) et forme un angle obtus avec la trajectoire des pierres et, à la suite de celle-ci, une partie de sortie (12) rectiligne allongée qui forme un angle aigu avec la trajectoire des pierres.

4. Véhicule automobile selon la revendication 1, dans lequel la moulure est sortante de la carrosserie, caractérisé par le fait que le flanc d'entrée (15) de la moulure (13) forme un angle aussi aigu que possible avec la trajectoire des pierres projetées.

5. Véhicule automobile selon la revendication 4, caractérisé par le fait que la moulure (14) comporte, à la suite de son flanc d'entrée (15) qui forme un angle aigu avec la trajectoire des pierres projetées, une partie de moulure (17) rentrant dans le profil extérieur de la partie de carrosserie (1) et, à la suite de celle-ci, un flanc de sortie (18) qui conduit au profil extérieur de la partie de carrosserie (1).
